# EUROPÄISCHE PATENTSCHRIFT

(11) **EP 3 977 836 B1**
(45) Veröffentlichungstag und Bekanntmachung des Hinweises auf die Patenterteilung: **30.11.2022**
(21) Anmeldenummer: 20199965.3
(22) Anmeldetag: 02.10.2020
(51) Int. Cl.: A01B 21/08, A01B 23/04

(54) **KETTENSCHEIBENEGGENVORRICHTUNG MIT VERÄNDERBAREM ANSTELLWINKEL**
CHAIN DISC HARROW WITH ADJUSTABLE PITCH ANGLE
HERSE À DISQUES À CHAÎNES AVEC ANGLE D'ATTAQUE RÉGLABLE

(43) Veröffentlichungstag der Anmeldung: 06.04.2022
(73) Patentinhaber: Fliegl Agro-Center GmbH, 84556 Kastl (DE)
(72) Erfinder: Fliegl sen., Josef, 84556 Kastl (DE)
(74) Vertreter: Nußbaum, Christopher

(56) Entgegenhaltungen:
- EP-A1- 2 160 936
- DE-U1-202019 101 292
- EE-U1- 01 245
- US-A1- 2011 203 818

## Beschreibung

Die vorliegende Erfindung betrifft eine Kettenscheibeneggenvorrichtung mit Veränderbarem Anstellwinkel.

Kettenscheibeneggenvorrichtungen sind üblicherweise als eine Art Anhänger ausgebildet, der mittels eines Zugfahrzeugs beispielsweise über ein zu bearbeitendes Feld gezogen werden kann. Derartige Kettenscheibenvorrichtungen weisen üblicherweise mehrere sogenannte Kettenscheibeneggen auf, die mehrere in Reihe hintereinander angeordnete Scheibeneggen aufweisen, die mittels einer Art Kettenstruktur miteinander verbunden sind.

Die DE 20 2019 101 292 U1 zeigt eine Kettenscheibeneggenvorrichtung zur Bodenbearbeitung. An einer Rahmenstruktur der Kettenscheibeneggenvorrichtung sind zwei schwenkbare Trägerarme um jeweilige in Hochrichtung verlaufende Achsen schwenkbar gelagert. An jedem Trägerarm ist eine Kettenscheibenegge befestigt. Durch Verschwenken der Trägerarme relativ zur Rahmenstruktur kann ein jeweiliger Anstellwinkel der Kettenscheibeneggen gegenüber einer Fahrtrichtung der Kettenscheibeneggenvorrichtung variiert werden.

Die US 2011/0203818 A1 zeigt eine Kettenscheibeneggenvorrichtung mit vier Kettenscheibeneggen, die u.a. an seitlichen Rahmenteilen befestigt sind, welche eingeklappt werden können.

Die EE 01245 U1 und die EP 2 160 936 A1 zeigen ebenfalls eine Kettenscheibeneggenvorrichtung mit vier Kettenscheibeneggen.

Beim Verwenden solcher Kettenscheibeneggenvorrichtungen kann es wünschenswert sein, je nach Randbedingungen, eine unterschiedliche Bodenbearbeitung zu ermöglichen.

Es ist die Aufgabe der vorliegenden Erfindung, eine Kettenscheibeneggenvorrichtung bereitzustellen, die auf besonders einfache Weise eine unterschiedliche Art der Bodenbearbeitung ermöglicht.

Diese Aufgabe wird durch eine Kettenscheibeneggenvorrichtung mit den Merkmalen des Anspruchs 1 gelöst. Weitere mögliche Ausgestaltungen der Erfindung sind in den abhängigen Ansprüchen, der Beschreibung und den Figuren angegeben.

Die erfindungsgemäße Kettenscheibeneggenvorrichtung umfasst ein Fahrwerk und eine mit dem Fahrwerk verbundene Rahmenstruktur. Des Weiteren umfasst die Kettenscheibeneggenvorrichtung wenigstens eine Kettenscheibenegge, die mehrere Scheibeneggen aufweist, welche mittels einer Kettenstruktur miteinander verbunden sind. Die Kettenscheibenegge ist an zwei unterschiedlichen Teilen der Rahmenstruktur befestigt, die zum Verändern eines Anstellwinkels der Kettenscheibenegge gegenüber einer Fahrtrichtung der Kettenscheibeneggenvorrichtung relativ zueinander beweglich sind.

Dadurch, dass die wenigstens eine Kettenscheibenegge an zwei unterschiedlichen Teilen der Rahmenstruktur befestigt ist, die relativ zueinander beweglich sind, kann der Anstellwinkel der Kettenscheibenegge gegenüber der Fahrtrichtung der Kettenscheibeneggenvorrichtung verändert werden. Dadurch ist es möglich, die Aggressivität der Kettenscheibeneggenvorrichtung zu verstellen.

Fluchten die Scheibeneggen beispielsweise in Fahrtrichtung der Kettenscheibeneggenvorrichtung, so wird der zu bearbeitende Boden quasi gar nicht beziehungsweise kaum umgewälzt, wobei beispielsweise Halme, die insbesondere quer zur Fahrtrichtung angeordnet auf dem Boden liegen, besonders gut durchtrennt werden können. Möchte man hingegen, dass der Boden durch die Kettenscheibeneggenvorrichtung auch umgewälzt wird, so ist es bei der erfindungsgemäßen Kettenscheibeneggenvorrichtung ganz einfach möglich, die unterschiedlichen Teile der Rahmenstruktur, an denen die Kettenscheibenegge befestigt ist, zum Verändern des Anstellwinkels der Kettenscheibenegge gegenüber der Fahrtrichtung der Kettenscheibeneggenvorrichtung relativ zueinander zu verstellen. So kann ein Winkel, der zwischen den jeweiligen Scheibeneggen der Kettenscheibenegge und der Fahrtrichtung der Kettenscheibeneggenvorrichtung eingeschlossen wird, also ganz variabel eingestellt werden, je nachdem was für einen Boden man bearbeiten möchte beziehungsweise wie stark dieser umgewälzt werden soll. Somit kann besagte Aggressivität der Kettenscheibeneggenvorrichtung ganz einfach verstellt werden.

Die Erfindung sieht zudem vor, dass die Rahmenstruktur ein Mittelteil und wenigstens ein Anbauteil aufweist, das zum Verändern des Anstellwinkels relativ zum Mittelteil in Längsrichtung der Kettenscheibeneggenvorrichtung verschiebbar ist, wobei ein erstes Längsende der Kettenscheibenegge zumindest mittelbar am Mittelteil und ein zweites Längsende der Kettenscheibenegge zumindest mittelbar am Anbauteil befestigt ist. Besagtes Anbauteil kann also ganz einfach gegenüber dem Mittelteil in Längsrichtung der Kettenscheibeneggenvorrichtung verstellt beziehungsweise verschoben werden. Dadurch, dass das erste Längsende der Kettenscheibenegge zumindest mittelbar am Mittelteil und das zweite Längsende der Kettenscheibenegge zumindest mittelbar am Anbauteil befestigt ist, ist durch Verschieben des Anbauteils relativ zum Mittelteil ganz einfach möglich, besagten Anstellwinkel der Kettenscheibenegge und somit die Aggressivität der Kettenscheibenegge zu verstellen.

Eine weitere mögliche Ausgestaltung der Erfindung sieht vor, dass das Anbauteil teleskopierbar im Mittelteil gelagert ist. Dadurch ergibt sich eine besonders stabile beziehungsweise robuste Lagerung des Anbauteils am beziehungsweise im Mittelteil. Mit den üblicherweise gegebenen rauen Bedingungen in der Landwirtschaft kann so eine dauerhaft zuverlässige Funktionsweise der Kettenscheibenvorrichtung begünstigt werden.

In weiterer möglicher Ausgestaltung der Erfindung ist es vorgesehen, dass das erste Längsende an einer Aufhängung des Mittelteils befestigt ist, die zum Verändern des Anstellwinkels relativ zum restlichen Mittelteil in Längsrichtung der Kettenscheibeneggenvorrichtung verschiebbar ist. Durch Verschiebung beziehungsweise Bewegung der Aufhängung des Mittelteils zum restlichen Mittelteil kann also das erste Längsende der Kettenscheibenegge relativ zum zweiten Längsende der Kettenscheibenegge verschoben werden, sodass in Folge dessen der besagte Anstellwinkel der Kettenscheibenegge gegenüber der Fahrtrichtung der Kettenscheibeneggenvorrichtung verändert werden kann. Dadurch kann wiederum besagte Aggressivität der Kettenscheibeneggenvorrichtung bei der Bodenbearbeitung ganz einfach eingestellt beziehungsweise variiert werden.

In weiterer möglicher Ausgestaltung der Erfindung ist es vorgesehen, dass das Mittelteil der Rahmenstruktur mit dem Fahrwerk verbunden ist. In dem Zusammenhang kann es insbesondere vorgesehen sein, dass das wenigstens eine Anbauteil der Rahmenstruktur nicht in Bodenkontakt ist. So kann man beispielsweise zur Veränderung des Anstellwinkels der Kettenscheibenegge das besagte Anbauteil der Rahmenstruktur relativ einfach gegenüber dem Mittelteil verstellen beziehungsweise verschieben, um besagten Anstellwinkel der Kettenscheibenegge zu variieren.

Eine weitere mögliche Ausgestaltung der Erfindung sieht vor, dass die Kettenscheibeneggenvorrichtung einen hydraulischen und/oder mechanischen Mechanismus aufweist, der dazu ausgelegt ist, die unterschiedlichen Teile der Rahmenstruktur zum Verändern des Anstellwinkels der Kettenscheibenegge relativ zueinander zu bewegen. So ist es auf einfache Weise möglich, den Anstellwinkel der wenigstens einen Kettenscheibenegge wunschgemäß einzustellen. Die hydraulische und/oder mechanische Verstellbarkeit über besagten Mechanismus kann beispielsweise direkt über entsprechende Mittel an der Kettenscheibeneggenvorrichtung betätigt werden. Auch ist es beispielsweise denkbar, dass die Kettenscheibeneggenvorrichtung eine entsprechende Schnittstelle für ein Zugfahrzeug aufweist, wobei über diese Schnittstelle Signale übertragen werden können, mittels denen der hydraulische und/oder mechanische Mechanismus betätigt werden kann. In dem Fall ist es auf einfache Weise möglich, in einem Zugfahrzeug sitzend besagten Anstellwinkel der Kettenscheibenegge zu verändern.

In weiterer möglicher Ausgestaltung der Erfindung ist es vorgesehen, dass der hydraulische Mechanismus zumindest einen Hydraulikzylinder aufweist, der dazu ausgelegt ist, die unterschiedlichen Teile der Rahmenstruktur zum Verändern des Anstellwinkels der Kettenscheibenegge relativ zueinander zu bewegen. Beispielsweise kann ein Ende des Hydraulikzylinders am Mittelteil und ein anderes Ende an besagtem Anbauteil der Rahmenstruktur befestigt sein, sodass durch entsprechende Betätigung des Hydraulikzylinders das Anbauteil gegenüber dem Mittelteil verschoben werden kann. Auch ist es beispielsweise möglich, dass der Hydraulikzylinder mit einem Ende an besagter Aufhängung des Mittelteils befestigt ist, wobei ein anderes Ende des Hydraulikzylinders am restlichen Mittelteil befestigt ist, sodass die Aufhängung des Mittelteils ganz einfach relativ zum restlichen Mittelteil in Längsrichtung der Kettenscheibeneggenvorrichtung verschoben beziehungsweise verstellt werden kann.

Gemäß einer weiteren möglichen Ausgestaltung der Erfindung ist es vorgesehen, dass die Kettenscheibeneggenvorrichtung vier der Kettenscheibeneggen aufweist, welche jeweils an zwei unterschiedlichen Teilen der Rahmenstruktur befestigt sind, die zum Verändern jeweiliger Anstellwinkel der Kettenscheibeneggen gegenüber der Fahrtrichtung der Kettenscheibeneggenvorrichtung relativ zueinander beweglich sind. Die vier Kettenscheibeneggen können beispielsweise zumindest im Wesentlichen rautenförmig angeordnet sein. In Zusammenhang mit den vier Kettenscheibeneggen kann es beispielsweise vorgesehen sein, dass die Rahmenstruktur neben dem Mittelteil und dem bereits erwähnten Anbauteil ein weiteres Anbauteil aufweist, wobei die beiden Anbauteile an gegenüberliegenden Enden des Mittelteils angeordnet sein können, wobei die Anbauteile in Längsrichtung der Kettenscheibeneggenvorrichtung ausgefahren und eingefahren werden können, um beispielsweise darüber die jeweiligen Anstellwinkel der vier Kettenscheibeneggen gegenüber der Fahrtrichtung zu verändern.

Schließlich sieht eine weitere mögliche Ausgestaltung der Erfindung vor, dass die Kettenscheibeneggenvorrichtung einen Mechanismus zum Einstellen einer Kettenspannung der wenigstens einen Kettenscheibenegge aufweist. Beispielsweise kann der Mechanismus dazu ausgelegt sein, das Mittelteil der Rahmenstruktur in Querrichtung der Kettenscheibeneggenvorrichtung auszufahren und einzufahren, um so die Kettenspannung der wenigstens einen Kettenscheibenegge einzustellen. Wird also die Rahmenstruktur durch Relativbewegung der unterschiedlichen Teile der Rahmenstruktur verändert, um den Anstellwinkel der Kettenscheibenegge zu verstellen, so kann der Mechanismus zum Einstellen der Kettenspannung verwendet werden, um auch bei unterschiedlichen Anstellwinkeln für eine gleichbleibende Kettenspannung bei der wenigstens einen Kettenscheibenegge zu sorgen. Auch ist es über besagten Mechanismus zum Einstellen der Kettenspannung möglich, je nach eingestelltem Anstellwinkel beziehungsweise Aggressivität der Kettenscheibenegge die Kettenspannung der wenigstens einen Kettenscheibenegge passend einzustellen, um das gewünschte Bearbeitungsergebnis bei der Bodenbearbeitung sicherstellen zu können.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Draufsicht auf eine Kettenscheibeneggenvorrichtung mit veränderbarem Anstellwinkel;
- Fig. 2: eine Draufsicht auf den in Fig. 1 gekennzeichneten Bereich B;
- Fig. 3: eine Draufsicht auf den in Fig. 1 gekennzeichneten Bereich A.

Gleiche oder funktionsgleiche Elemente sind in den Figuren mit den gleichen Bezugszeichen versehen.

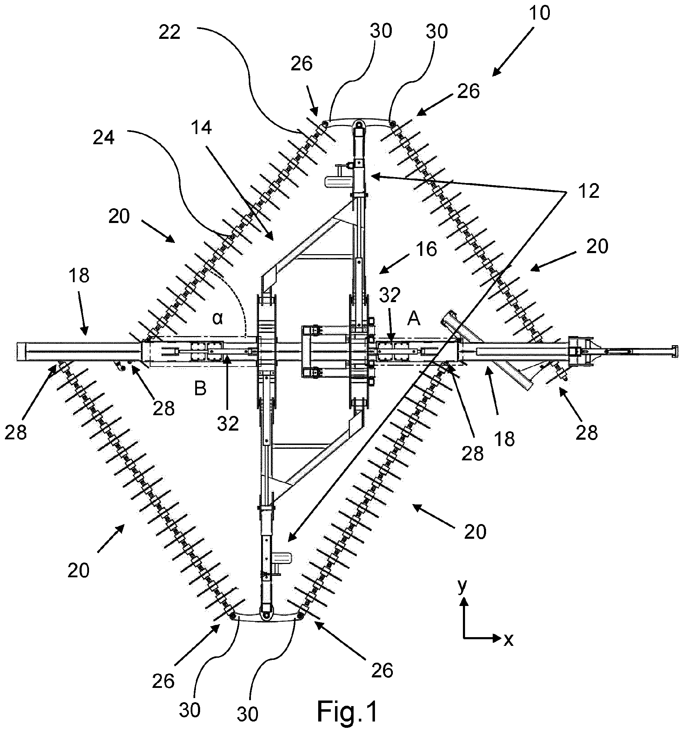

Eine Kettenscheibeneggenvorrichtung 10 ist in einer Draufsicht in Fig. 1 gezeigt. Die Kettenscheibeneggenvorrichtung 10 umfasst ein Fahrwerk 12 mit mehreren hier nicht näher bezeichneten Rädern. Mit dem Fahrwerk ist eine Rahmenstruktur 14 der Kettenscheibeneggenvorrichtung 10 verbunden. Die Rahmenstruktur 14 umfasst ein mit dem Fahrwerk 12 verbundenes Mittelteil 16 und zwei Anbauteile 18, die bezogen auf die Längsrichtung x der Kettenscheibeneggenvorrichtung 10 an gegenüberliegenden Seiten des Mittelteils 16 angeordnet sind.

Des Weiteren weist die Kettenscheibeneggenvorrichtung 10 vier Kettenscheibeneggen 20 auf, die jeweils mehrere hintereinander in Reihe angeordnete Scheibeneggen 22 aufweisen, welche mittels einer jeweiligen Kettenstruktur 24 miteinander verbunden sind. Der Übersichtlichkeit halber wurde vorliegend nur eine der Scheibeneggen 22 mit einem Bezugszeichen versehen, wobei auch nur bei einer der Kettenscheibeneggen 20 aus Übersichtlichkeitsgründen die Kettenstruktur 24 mit einem Bezugszeichen versehen wurde.

Ein jeweiliges erstes Längsende 26 der Kettenscheibeneggen 20 ist zumindest mittelbar am Mittelteil 16 der Rahmenstruktur 14 befestigt. Die Anbauteile 18 können zum Verändern jeweiliger Anstellwinkel α der Kettenscheibeneggen 20 in Längsrichtung x der Kettenscheibeneggenvorrichtung 10 relativ zum Mittelteil 16 verschoben werden. Dafür sind die Anbauteile 18 teleskopierbar im Mittelteil 16 gelagert. Der Übersichtlichkeit halber wurde nur bei einer der Kettenscheibeneggen 20 der Anstellwinkel α eingezeichnet.

Werden also die Anbauteile 18 in das Mittelteil 16 eingefahren, so wird der Anstellwinkel α vergrößert. Beträgt der Anstellwinkel α 90°, so sind die Scheibeneggen 22 parallel zur Längsrichtung x und somit parallel zur Fahrtrichtung der Kettenscheibeneggenvorrichtung 10 ausgerichtet. Je weiter die Anbauteile 18 aus dem Mittelteil 16 herausgezogen werden, desto kleiner wird der Anstellwinkel α eingestellt. Umso schräger werden entsprechend die Scheibeneggen 22 zur Längsrichtung x und somit zur Fahrtrichtung der Kettenscheibeneggenvorrichtung 10 eingestellt. Durch Veränderung des Anstellwinkels α kann somit die Aggressivität der jeweiligen Scheibeneggen 22 variiert werden.

Die ersten Längsenden 26 der Kettenscheibeneggen 20 sind vorliegend an einer jeweiligen Aufhängung 30 des Mittelteils 16 befestigt. Zum Verändern der jeweiligen Einstellwinkel α kann es vorgesehen sein, dass diese Aufhängungen 30 relativ zum restlichen Mittelteil 16in Längsrichtung x der Kettenscheibeneggenvorrichtung 10 verschiebbar ausgebildet sind. Dadurch ist es also ebenfalls möglich die Aggressivität der jeweiligen Scheibeneggen 22 einzustellen. Sieht man beide Verstellmöglichkeiten vor, also das Ausfahren und Einfahren der Anbauteile 18 und die Verschiebbarkeit der jeweiligen Aufhängungen 30 relativ zum restlichen Mittelteil 16, so können die Anstellwinkel α in einem relativ großen Bereich verändert werden.

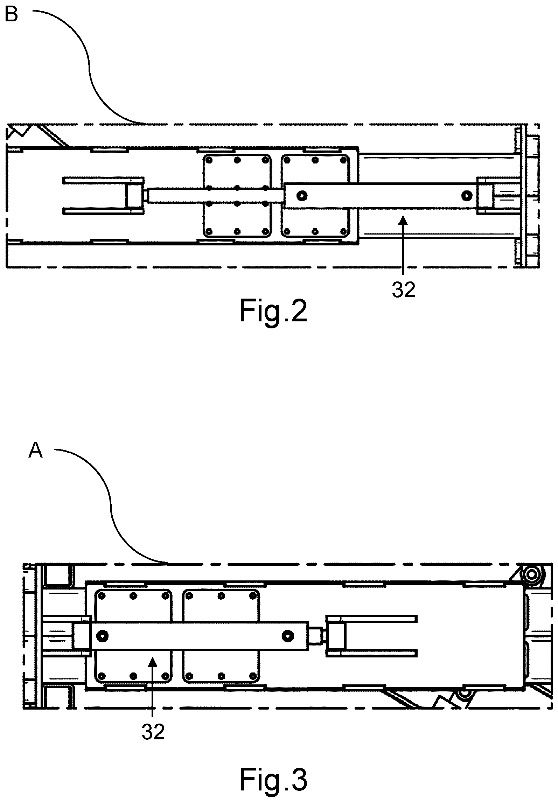

Die Kettenscheibeneggenvorrichtung 10 kann einen hydraulischen und/oder mechanischen Mechanismus aufweisen, der dazu ausgelegt ist, die unterschiedlichen Teile der Rahmenstruktur 14 zum Verändern der jeweiligen Anstellwinkel α der Kettenscheibeneggen 20 relativ zueinander zu bewegen. Vorliegend sind zwei Hydraulikzylinder 32 zu erkennen, die dazu eingerichtet sind, die Anbauteile 18 aus dem Mittelteil 16 auszufahren und in dieses einzufahren, um den jeweiligen Anstellwinkel α zu verändern. In Fig. 2 ist der in Fig. 1 gekennzeichnete Bereich B in einer Draufsicht gezeigt. Vorliegend ist einer der beiden Hydraulikzylinder 32 zu erkennen, wobei der hier zu erkennende Hydraulikzylinder 32 im ausgefahrenen Zustand dargestellt ist.

In Fig. 3 ist der Bereich A, der in Fig. 1 gekennzeichnet ist, in einer Draufsicht gezeigt. Hier ist der andere Hydraulikzylinder 32 zu erkennen, wobei dieser im eingefahrenen Zustand dargestellt ist. Die beiden Hydraulikzylinder 32 sind lediglich beispielhaft zu verstehen. Es können auch andere Mittel vorgesehen sein, um die Anbauteile 18 aus dem Mittelteil 16 auszufahren und in dieses einzufahren, um die jeweiligen Anstellwinkel α und somit die Aggressivität der Scheibeneggen 22 einzustellen. So können auch ähnliche Hydraulikzylinder 32 beispielsweise vorgesehen sein, um besagte Aufhängungen 30 des Mittelteils 16 gegenüber dem restlichen Mittelteil in Längsrichtung x zu verschieben, um alternativ oder zusätzlich darüber die Anstellwinkel α zu variieren.

Die Kettenscheibeneggenvorrichtung 10 kann darüber hinaus einen hier nicht näher dargestellten Mechanismus zum Einstellen jeweiliger Kettenspannungen der Kettenscheibeneggen 20 aufweisen. Der Mechanismus kann beispielsweise dazu ausgelegt sein, das Mittelteil 16 in Querrichtung y der Kettenscheibeneggenvorrichtung 10 auszufahren und einzufahren, um darüber jeweilige Kettenspannungen der Kettenscheibeneggen 20 variieren zu können. So ist es beispielweise möglich, bei unterschiedlichen Anstellwinkeln α für die gleiche Kettenspannung bei den jeweiligen Kettenscheibeneggen 20 zu sorgen. Auch ist es beispielsweise möglich, abgestimmt auf die jeweiligen Anstellwinkel α die Kettenspannung zu erhöhen oder zu erniedrigen, je nachdem was für die jeweilige Art der Bodenbearbeitung gerade vorteilhaft ist.

Insgesamt ist es mittels der beschriebenen Kettenscheibeneggenvorrichtung 10 also möglich, die Anstellwinkel α der Kettenscheibeneggen 20 und somit die Aggressivität der jeweiligen Scheibeneggen 22 zu variieren.

### BEZUGSZEICHENLISTE

- 10: Kettenscheibeneggenvorrichtung
- 12: Fahrwerk
- 14: Rahmenstruktur
- 16: Mittelteil der Rahmenstruktur
- 18: Anbauteile der Rahmenstruktur
- 20: Kettenscheibeneggen
- 22: Scheibeneggen
- 24: Kettenstrukturen
- 26: erste Längsenden der Kettenscheibeneggen
- 28: zweite Längsenden der Kettenscheibeneggen
- 30: Aufhängungen des Mittelteils
- 32: Hydraulikzylinder
- A: Bereich
- B: Bereich
- x: Längsrichtung
- y: Querrichtung
- α: Anstellwinkel

## Patentansprüche

1. Kettenscheibeneggenvorrichtung (10), umfassend
- ein Fahrwerk (12);
- eine mit dem Fahrwerk (12) verbundene Rahmenstruktur (14);
- wenigstens eine Kettenscheibenegge (20), die mehrere Scheibeneggen (22) aufweist, welche mittels einer Kettenstruktur (24) miteinander verbunden sind;
**dadurch gekennzeichnet, dass**
- die Kettenscheibenegge (20) an zwei unterschiedlichen Teilen der Rahmenstruktur (14) befestigt ist, die zum Verändern eines Anstellwinkels (a) der Kettenscheibenegge (20) gegenüber einer Fahrtrichtung der Kettenscheibeneggenvorrichtung (10) relativ zueinander beweglich sind;
- die Rahmenstruktur (14) ein Mittelteil (16) und wenigstens ein Anbauteil (18) aufweist, das zum Verändern des Anstellwinkels (a) relativ zum Mittelteil (16) in Längsrichtung (x) der Kettenscheibeneggenvorrichtung (10) verschiebbar ist, wobei ein erstes Längsende (26) der Kettenscheibenegge (20) zumindest mittelbar am Mittelteil (16) und ein zweites Längsende (28) der Kettenscheibenegge (20) zumindest mittelbar am Anbauteil (18) befestigt ist.

2. Kettenscheibeneggenvorrichtung (10) nach Anspruch 1,
**dadurch gekennzeichnet, dass**
das Anbauteil (18) teleskopierbar im Mittelteil (16) gelagert ist.

3. Kettenscheibeneggenvorrichtung (10) nach Anspruch 1 oder 2,
**dadurch gekennzeichnet, dass**
das erste Längsende an einer Aufhängung (30) des Mittelteils (16) befestigt ist, die zum Verändern des Anstellwinkels (a) relativ zum restlichen Mittelteil (16) in Längsrichtung (x) der Kettenscheibeneggenvorrichtung (10) verschiebbar ist.

4. Kettenscheibeneggenvorrichtung (10) nach einem der vorhergehenden Ansprüche, **dadurch gekennzeichnet, dass**
das Mittelteil (16) der Rahmenstruktur (14) mit dem Fahrwerk (12) verbunden ist.

5. Kettenscheibeneggenvorrichtung (10) nach einem der vorhergehenden Ansprüche, **dadurch gekennzeichnet, dass**
die Kettenscheibeneggenvorrichtung (10) einen hydraulischen und/oder mechanischen Mechanismus aufweist, der dazu ausgelegt ist, die unterschiedlichen Teile der Rahmenstruktur (14) zum Verändern des Anstellwinkels (a) der Kettenscheibenegge (20) relativ zueinander zu bewegen.

6. Kettenscheibeneggenvorrichtung (10) nach Anspruch 5,
**dadurch gekennzeichnet, dass**
der hydraulische Mechanismus zumindest einen Hydraulikzylinder (32) aufweist, der dazu ausgelegt ist, die unterschiedlichen Teile der Rahmenstruktur (14) zum Verändern des Anstellwinkels (α) der Kettenscheibenegge (20) relativ zueinander zu bewegen.

7. Kettenscheibeneggenvorrichtung (10) nach einem der vorhergehenden Ansprüche, **dadurch gekennzeichnet, dass**
die Kettenscheibeneggenvorrichtung (10) vier der Kettenscheibeneggen (20) aufweist, welche jeweils an zwei unterschiedlichen Teilen der Rahmenstruktur (14) befestigt sind, die zum Verändern jeweiliger Anstellwinkel (a) der Kettenscheibeneggen (20) gegenüber der Fahrtrichtung der Kettenscheibeneggenvorrichtung (10) relativ zueinander beweglich sind.

8. Kettenscheibeneggenvorrichtung (10) nach einem der vorhergehenden Ansprüche, **dadurch gekennzeichnet, dass**
die Kettenscheibeneggenvorrichtung (10) einen Mechanismus zum Einstellen einer Kettenspannung der wenigstens einen Kettenscheibenegge (20) aufweist.

## Claims

1. Chain disc harrow unit (10), comprising
- a chassis (12);
- a frame structure (14) connected to the chassis (12);
- at least one chain disc harrow (20) having a plurality of disc harrows (22) that are connected to each other by means of a chain structure (24);
**characterised in that**
- the chain disc harrow (20) is attached to two different parts of the frame structure (14) that are movable relative to each other for changing a pitch angle (α) of the chain disc harrow (20) with respect to a direction of travel of the chain disc harrow unit (10);
- the frame structure (14) has a central part (16) and at least one attachment (18) which is displaceable relative to the central part (16) in the longitudinal direction (x) of the chain disc harrow unit (10) in order to change the pitch angle (α), a first longitudinal end (26) of the chain disc harrow (20) being fastened at least indirectly to the central part (16) and a second longitudinal end (28) of the chain disc harrow (20) being fastened at least indirectly to the attachment (18).

2. Chain disc harrow unit (10) according to claim 1,
**characterised in that**
the attachment (18) is telescopically mounted in the central part (16).

3. Chain disc harrow unit (10) according to claim 1 or 2,
**characterised in that**
the first longitudinal end is attached to a mounting (30) of the central part (16) that is displaceable in the longitudinal direction (x) of the chain disc harrow unit (10) for changing the pitch angle (α) relative to the remainder of the central part (16).

4. Chain disc harrow unit (10) according to any one of the preceding claims, **characterised in that**
the central part (16) of the frame structure (14) is connected to the chassis (12).

5. Chain disc harrow unit (10) according to any one of the preceding claims, **characterised in that**
the chain disc harrow unit (10) has a hydraulic and/or mechanical mechanism adapted to move the different parts of the frame structure (14) relative to each other for changing the pitch angle (α) of the chain disc harrow (20).

6. Chain disc harrow unit (10) according to claim 5,
**characterised in that**
the hydraulic mechanism has at least one hydraulic cylinder (32) adapted to move the different parts of the frame structure (14) relative to each other for changing the pitch angle (α) of the disc harrow (20).

7. Chain disc harrow unit (10) according to any one of the preceding claims, **characterised in that**
the chain disc harrow unit (10) comprises four of the chain disc harrows (20), each of which is attached to two different parts of the frame structure (14) that are movable relative to each other for changing respective pitch angles (α) of the chain disc harrows (20) with respect to the direction of travel of the chain disc harrow unit (10).

8. Chain disc harrow unit (10) according to any one of the preceding claims, **characterised in that**
the chain disc harrow unit (10) comprises a mechanism for adjusting a chain tension of the at least one chain disc harrow (20).

## Revendications

1. Dispositif de herse à disques à chaîne (10) comprenant
- un train de roulement (12) ;
- une structure de châssis (14) reliée au train de roulement (12) ;
- au moins une herse à disques à chaîne (20) comprenant une pluralité de herses à disques (22) interconnectées par une structure de chaîne (24) ;
**caractérisé en ce que**
- la herse à disques à chaîne (20) est fixée à deux parties différentes de la structure de châssis (14), qui sont mobiles l'une par rapport à l'autre afin de modifier un angle d'attaque (α) de la herse à disques à chaîne (20) par rapport à une direction de déplacement de dispositif de herse à disques à chaîne (10) ;
- la structure de châssis (14) présente une partie centrale (16) et au moins une pièce rapportée (18) qui peut être déplacée par rapport à la partie centrale (16) dans la direction longitudinale (x) du dispositif de herse à disques à chaîne (10) afin de modifier l'angle d'attaque (α), une première extrémité longitudinale (26) de la herse à disques à chaîne (20) étant fixée au moins indirectement à la partie centrale (16) et une seconde extrémité longitudinale (28) de la herse à disques à chaîne (20) étant fixée au moins indirectement à la pièce rapportée (18).

2. Dispositif de herse à disques à chaîne (10) selon la revendication 1,
**caractérisé en ce que**
la pièce rapportée (18) est montée de manière télescopique dans la partie centrale (16).

3. Dispositif de herse à disques à chaîne (10) selon la revendication 1 ou 2, **caractérisé en ce que**
la première extrémité longitudinale est fixée à une suspension (30) de la partie centrale (16), qui peut être déplacée dans la direction longitudinale (x) du dispositif de herse à disques à chaîne (10) afin de modifier l'angle d'attaque (α) par rapport à la partie centrale restante (16).

4. Dispositif de herse à disques à chaîne (10) selon l'une quelconque des revendications précédentes, **caractérisé en ce que**
la partie centrale (16) de la structure de châssis (14) est reliée au train de roulement (12).

5. Dispositif de herse à disques à chaîne (10) selon l'une quelconque des revendications précédentes,
**caractérisé en ce que**
le dispositif de herse à disques à chaîne (10) comprend un mécanisme hydraulique et/ou mécanique conçu pour déplacer les différentes parties de la structure de châssis (14) les unes par rapport aux autres afin de modifier l'angle d'attaque (α) de la herse à disques à chaîne (20).

6. Dispositif de herse à disques à chaîne (10) selon la revendication 5,
**caractérisé en ce que**
le mécanisme hydraulique comprend au moins un vérin hydraulique (32) destiné à déplacer les différentes parties de la structure de châssis (14) les unes par rapport aux autres afin de modifier l'angle d'attaque (α) de la herse à disques à chaîne (20).

7. Dispositif de herse à disques à chaîne (10) selon l'une quelconque des revendications précédentes,
**caractérisé en ce que**
le dispositif de herse à disques à chaînes (10) comporte quatre des herses à disques à chaînes (20), dont chacune est fixée à deux parties différentes de la structure de châssis (14), qui sont mobiles pour modifier les angles d'attaque respectifs (α) des herses à disques à chaîne (20) par rapport à la direction de déplacement du dispositif de herse à disques à chaîne (10) les unes par rapport aux autres.

8. Dispositif de herse à disques à chaîne (10) selon l'une quelconque des revendications précédentes, **caractérisé en ce que**
le dispositif de herse à disques à chaîne (10) comporte un mécanisme pour régler une tension de chaîne de la au moins une herse à disques à chaîne (20).
